(19) Europäisches Patentamt
European Patent Office
Office européen des brevets

(11) Publication number: **0 107 262 B1**

(12) **EUROPEAN PATENT SPECIFICATION**

(45) Date of publication of patent specification: **05.11.86**

(51) Int. Cl.⁴: **C 08 G 73/10**, C 08 J 9/02, C 08 J 9/32, C 08 L 79/08, B 29 C 67/22

(21) Application number: **83301628.0**

(22) Date of filing: **23.03.83**

(54) **Closed cell polyimide foams and methods of making same.**

(30) Priority: **27.09.82 US 423802**

(43) Date of publication of application: **02.05.84 Bulletin 84/18**

(45) Publication of the grant of the patent: **05.11.86 Bulletin 86/45**

(84) Designated Contracting States: **AT BE CH DE FR GB IT LI LU NL SE**

(56) References cited:
**DE-B-1 808 126**
**FR-A-1 540 433**
**US-A-4 161 477**

(73) Proprietor: **Gagliani, John**
**6280 Lance Place**
**San Diego California 92120 (US)**

(73) Proprietor: **Long, John V.**
**1756 E. Lexington Avenue**
**El Cajon California 92121 (US)**

(72) Inventor: **Gagliani, John**
**6280 Lance Place**
**San Diego California 92120 (US)**
Inventor: **Long, John V.**
**1756 E. Lexington Avenue**
**El Cajon California 92121 (US)**

(74) Representative: **Austin, Hedley William et al**
**A.A. THORNTON & CO. Northumberland House**
**303-306 High Holborn**
**London WC1V 7LE (GB)**

**EP 0 107 262 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The present invention is concerned with polyimide foams and, more particularly, with a method of making high temperature and flame resistant closed cell polyimide/polyimide-amide foams.

A number of polyimide compositions which have excellent flame resistance and serve as coatings and adhesives are described in U.S. Patents 4161477, 4183838, and 4183139. The coating and adhesive compositions described in these patents are made by first preparing a suitable N,N'-disubstituted bisimide by reacting an aromatic tetracarboxylic acid dianhydride with a lactam or aminoacid (lactams and their aminoacid equivalents may be referred to collectively as oxoimines). The mole ratio of dianhydride to lactam or aminoacid is preferably in the range 1:2.3 to 1:2.7 and the imidisation reaction is preferably carried out at a temperature of from 170° to 200°C for a period of 20 to 60 minutes.

The resulting bisimide is then dissolved in an inert solvent and a suitable diamine is added to produce a viscous fluid containing an intimate, unpolymerised mixture of the bisimide and the bisimide and the diamine which can be converted to a high molecular weight polymer on heating.

The solution is coated on to a surface and polymerised by heating at a temperature of from 177° to 316°C for a period of from 30 minutes to 5 hours. The following is an example of the type of exchange reaction which takes place on heating:

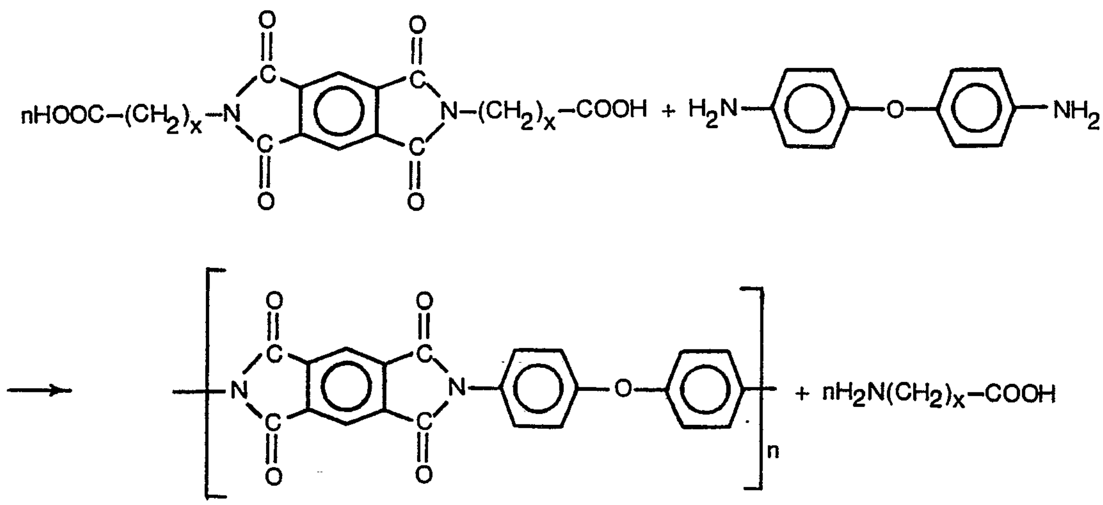

where n and x are positive integers.

The resulting coating is tough, highly adherent to various surfaces, and has very few pinholes or bubbles. It has excellent peel strength and is resistant to high temperatures, peeling, and abrasion.

However, the coating material of the prior art is not suitable for applications requiring a cellular or foam material, since conventional agitation foaming and the addition of known blowing agents add to the costs and complexity of the process and are not entirely effective at the relatively high polymerisation temperatures required.

A method of making polyimide/polyimide-amide *open* cell foams is known.

According to this method, an aromatic dianhydride is reacted with a lactam in a mole ratio of from about 1:0.05 to 1:1.5 to produce an N-substituted aliphatic monoimide which is then esterified by reaction with a suitable alcohol. A suitable diamine is then added and the resulting mixture is dried to a film or powder. The dry material spontaneously expands into a consolidated open cell foam when heated to a temperature of from 230° to 320°C. At the lower end of this temperature range, a primarily polyimide-amide foam is obtained; toward the upper end of the range, the foam produced is primarily polyimide. The flexibility, flame resistance and other physical characteristics of the resulting foam vary according to the proportions of the two polymers in the final product.

While this open cell foam is excellent for many applications, and can have physical properties tailored for specific purposes, it is not totally satisfactory for certain uses. For example, the open cell foam tends to shrink when exposed to flame or high temperatures. It may also absorb water or other liquids and is permeable to liquids and gases. Also, the relatively high temperatures necessary for foaming require complex and expensive heating equipment and the process is wasteful of energy.

In order to overcome the problems associated with open cell foams, we have now developed closed cell foams which are flame and heat resistant, resistant to flame-induced shrinkage, flexible, and resistant to permeation by liquids and gases. Furthermore, the process by which the closed cell foams are made is less complex then that of the open cell foams and provides a saving in energy consumption.

According to the present invention, therefore, there is provided a method of making a high temperature and flame resistant closed cell polyimide/polyimide-amide foam which comprises

(a) reacting at least one aromatic tetracarboxylic acid dianhydride (component A) with at least one lactam (component B) in a mole ratio of A:B of from 1:0.05 to 1:1.5 to form an N-substituted imide,

(b) reacting the product of step (a) with an alcohol to form an esterified N-substituted imide,

(c) mixing at least one diamine (component C) with the product of step (b),

(d) drying the resulting liquid mixture,

(e) pulverising the dried material to give particles having an average diameter of from 0.5 to 10 mm, and

(f) polymerising the resulting particles at a temperature of from 90° to 150°C to give a closed cell foam.

The method of the invention can also be used to prepare macroballoons and beads.

The reactions occurring during the polymerisation step of the present invention are complex and are not fully understood, but it appears that under the conditions used the polymer formed is primarily polyimide containing a proportion of polyimide-amide. The term "polyimide" is used hereinafter to refer to a polymer comprising polyimide and polyimide-amide.

The basic steps in producing the closed cell polyimide foam of the present invention consist of reacting an aromatic tetracarboxylic acid dianhydride with a lactam in a mole ratio of from 1:0.05 to 1:1.5 to produce an N-substituted monoimide, esterifying the imide with a suitable alcohol, adding at least one suitable diamine, drying the mixture to a non-tacky, manageable material, pulverising the dry material to a powder having an average particle diameter of from 0.5 to 10 mm, and then heating the powder for a suitable period at a temperature of from 90° to 150°C, which causes spontaneous foaming and polymerisation. According to the method of foaming the powder, *i.e.* restrained or unrestrained, a closed cell foam or macroballoons and beads can be prepared by the method of the invention. Preferably, an additional step of drying the material at a moderate temperature and reduced pressure is carried out just before or after the pulverisation step in order to remove any solvent remaining after the first drying step.

As indicated, a consolidated, uniform closed cell foam article or a number of macroballoons or beads can be produced by the method of the invention, depending on whether full foaming is restrained or unrestrained. Macroballoons can be produced in diameters of from 0.4 to 15 mm by unrestrained foaming, for example on a flat open surface or by feeding the powder into a flowing hot air stream. The best macroballoons are obtained when the average particle diameter of the powder is toward the lower end of the specified 0.5 to 10 mm range. The macroballoons themselves are useful in applications such as packing materials or as fillers in other casting resins. They can also be consolidated in moulds under moderate pressure with further heating and/or the addition of adhesives.

To directly form consolidated structures, the powder is charged into a closed mould. Typically, the powder expands to about 50 times its original volume. While an excess of powder can be used to ensure complete mould filling, a large excess, such as 100%, should be avoided as the product tends to be a mixture of open and closed cell foams. The optimum quantity of powder for use with a specific mould can easily be determined by expirical tests. In general, a mould fill of from 2 to 3% by volume is found to give excellent results.

Suitable aromatic dianhydrides for use in the method of the invention include those referred to in the prior art references cited above. Due to their ready availability at reasonable prices and the excellent foams which they produce, preferred dianhydrides are pyromellitic dianhydride and 3,3',4,4'-benzophenone tetracarboxylic acid dianhydride (BTDA), and mixtures thereof.

Any suitable lactam can be reacted with the dianhydride to produce an N-substituted imide. Preferred lactams are those of the formula

$$H_2C-(CH_2)_x-NHC=O$$

where x is an integer of from 2 to 4. Of these, the best results are obtained with caprolactam (x=4).

Any suitable reaction conditions can be used to prepare the N-substituted imide. The best results are obtained when the dianhydride is added to the lactam and the mixture is heated at a temperature of from 150° to 200°C until the imidisation reaction is complete, usually within 5 to 90 minutes. The best results have been obtained using a temperature of from 170° to 180°C for a period of about 30 minutes.

In order to produce a satisfactory foaming material, it is essential that the mole ratio of dianhydride to lactam is in the range 1:0.05 to 1:1.5. Below this range, the material forms a coating without foaming, and above this range, excessively rigid material is produced. Within the range, the best results are obtained using a mole ratio of dianhydride to lactam of from 1.0 to 2.0.

The N-substituted imide produced by the dianhydride/lactam reaction has the formula

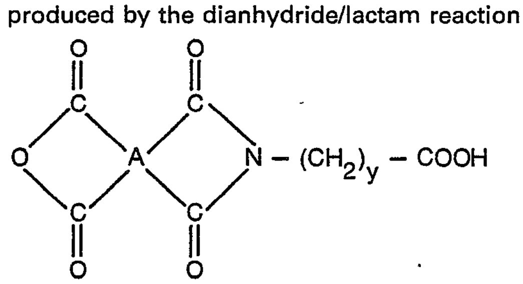

where y is an integer of from 3 to 5 and A is

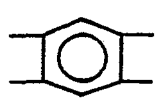 and /or 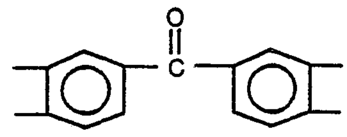

The imide obtained is then dissolved in a suitable alcohol and esterified at a suitable temperature. Any suitable alcohol can be used for esterifying the imide. Preferably, an alcohol having up to seven carbon atoms, which can be aliphatic or aromatic and can have halogen and/or amino substituents, or a mixture of two or more such alcohols, is used. Good results are obtained using such alcohols having boiling points of from 75° to 100°C. Lower boiling alcohols are too reactive and higher boiling alcohols require excessively high processing conditions to dry the resin. The best results are obtained with isopropyl alcohol, but excellent results are also obtained with ethyl alcohol and, particularly, with secondary alcohols having low reactivities and boiling points in the desired range.

The esterification reaction which takes place is as follows:

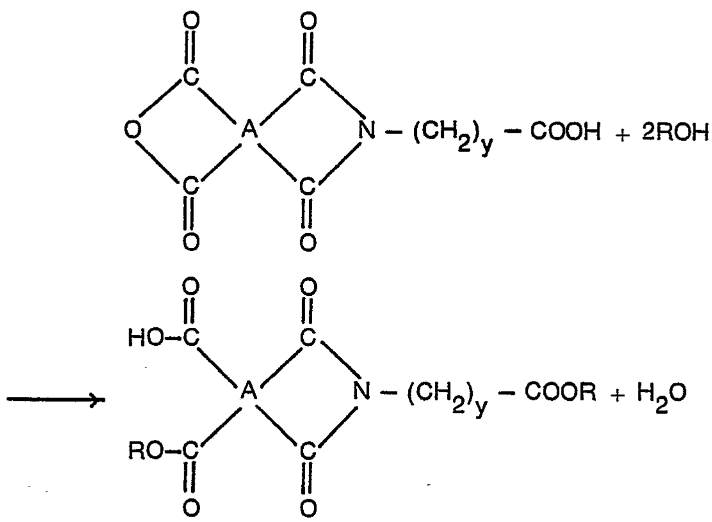

where y and A are as defined above and R is an aliphatic or aromatic moiety which can have halogen and/or amino substituents. The esterification can be carried out using any suitable conditions. Typically, a mole ratio of imide to alcohol of from 1:8 to 1:15 is preferred in order to ensure rapid esterification of the imide at reflux temperature. The imide solution is typically refluxed at a temperature of from 70° to 90°C until clear, which usually takes from 60 to 90 minutes.

Once esterification is complete, a suitable diamine or diamines is added to the solution. Preferably, an approximately stoichiometric quantity of the diamine component is added.

Any suitable diamine can be used in the method of the invention. Preferred diamines include, for example, *m*-phenylenediamine, *p*-phenylenediamine, 4,4′-diaminodiphenyl ether, 4,4′-diaminodiphenyl sulphone, 3,3′-diaminodiphenyl sulphone, 4,4′-diaminodiphenyl sulphide, 4,4′-diaminodipenylmethane, 3,3′-diaminodiphenylmethane, and mixtures of two or more thereof. Of these, the best results are obtained with 4,4′-diaminodiphenylmethane. If desired, the diamine component can comprise up to 30 mole % of aliphatic diamine(s) in association with these aromatic diamines. Preferred aliphatic diamines include, for example, 1,3-diaminopropane, 1,4-diaminobutane, 1,6-diaminohexane, 1,8-diaminooctane, 1,12-diaminododecane, and mixtures of two or more thereof.

Additives to improve various characteristics of the final foam can be added to the mixture as desired. Any appropriate additives can be used, such as fillers, surfactants, and fire retardants.

The addition of surfactants (surface active agents) to the mixture is particularly desirable when producing macroballoons; the presence of such agents gives cell walls of greater thickness and resiliency.

Typical surfactants include Corning 190 or 193 from Dow Corning Corp., FC430 from Minnesota Mining & Manufacturing Co., Zonyl (Trade Mark) FSB or FSC from E.I. duPont de Nemours & Co., and L550 from Union Carbide Corp. While any suitable concentration may be used, from 0.01 to 2% by weight, based on the weight of the solution prior to drying, is generally preferred. Of these surfactants, the best results have been obtained using Zonyl FSC. Fillers and reinforcing additives can also be added prior to drying the resin. Typical fillers include Kevlar (Trade Mark) aramid fibres, graphite fibres, glass fibres, carbon and graphite powders, Teflon (Trade Mark) fluorocarbon powders, and mixtures of two or more thereof.

Fire retardants can be added to the mixture to lower smoke emission, reduce flame spread, and extend the burnthrough resistance of the foam products. Typical fire retardants, which are generally used in amounts of from 2 to 50% by weight based on the weight of the final foam, include Firebake (Trade Mark) ZB aluminium trihydrate, antimony oxide, and mixtures of two or more thereof.

The solution is then dried by any suitable means. Simply heating the solution in an oven at a temperature of from 65° to 95°C until dry is satisfactory. Other conventional methods, such as spray drying, rotary drying, thin film evaporation, can be used as desired. The resulting free-flowing powder or flakes are non-tacky and can be stored indefinitely at room temperature.

It has been found that in order to produce uniform closed cell foam it is essential that the foaming powder has an average particle diameter of from 0.5 to 10 mm, preferably from 1.0 to 5.0 mm. If the drying process does not produce particles having an average diameter in the desired range, the powder is ground or pulverised to achieve the desired average particle size. Typically, the powder is reduced in size by mechanical grinding.

The resulting free flowing powder is suitable for producing closed cell foam and macroballoons according to the method of the invention. However, for the preparation of foams having the best cell uniformity and the maximum number of closed cells, it is often preferred that the powder be further dried (either before or after reduction to the final particle size) at a moderate temperature under reduced pressure. The best results are obtained where the powder is dried for a period of from 30 to 120 minutes at a temperature of from 50 to 80°C at a pressure of from 25 to 29 in. Hg (84.7 to 98.2 kPa).

The final step in converting the dry powder into a foam is accomplished by heating the powder for a suitable period at the required foaming temperature.

The reaction which takes place on polymerisation is a combined condensation and exchange reaction. Heating the powder to a temperature of from 90° to 150°C for a period of from 10 to 60 minutes causes the powder to expand to approximately 50 times its original volume to produce a uniform, resilient closed cell foam which appears to be a mixture of polyimide and polyimide-amide polymers. When the powder is foamed in a closed mould, using about 2 to 3% by volume of powder based on mould volume, a well consolidated foam product is obtained. When foamed without volume restraint, *i.e.* without the use of a mould, individual macroballoons, and/or agglomerations of macroballoons are obtained. The foam produced is tough, resilient, and does not shrink appreciably or emit significant smoke or toxic by-products when exposed to an open flame.

In order that the invention may be more fully understood, the following Examples are provided by way of illustration.

Example 1

515.5 g (1.6 moles) of 3,3'-4,4'-benzophenone tetracarboxylic acid dianhydride (BTDA) and 45.2 g (0.4 moles) of caprolactam were placed in a three-litre flask and heated to a temperature of about 175°C. After a period of about 30 minutes at this temperature, the mixture was cooled to about 70°C and 965 g of isopropanol was added. The solution was refluxed at about 90°C for about 70 minutes until the solution appeared clear. The solution was then cooled to just below 70°C and 317.12 g (1.6 moles) of 4,4'-diaminodiphenylmethane was added. The mixture was then refluxed at about 90°C for about 15 minutes, then cooled to room temperature and coated on to aluminium foil. The coating was dried overnight at about 82°C. The brittle product was crushed and placed in a vacuum oven at about 82°C for about 30 minutes at a pressure of 27 in. Hg (91.4 kPa). The powder was then further crushed to an average (and fairly uniform) particle diameter of about 3 mm. About 2.5% by volume of the powder was placed in an open mould which had been preheated to a temperature of about 110°C and the mould was closed. After about 30 minutes at this temperature, the mould was opened and a consolidated, closed cell foam product was removed. The product was resistant to flame and did not shrink appreciably when exposed to a direct flame.

Example 2

The procedure of Example 1 was repeated four times using powders of various average particle diameter. Whereas Example 1 used a powder having an average particle diameter of about 3 mm, these experiments used powders having average particle diameters of (a) about 0.1 mm, (b) about 0.5 mm, (c) about 10 mm, and (d) about 15 mm. The foam produced in (a) was a mixture of open and closed cell foam having poor physical properties. (b) and (c) produced good closed cell foams, while (d) produced foam with large, irregular closed cells giving a structure of lower uniformity and resiliency. Thus foaming powders having average particle diameters in the range 0.5 to 10 mm are preferred for the preparation of good closed cell foams; the best results were obtained using particles of about 3 mm, as in Example 1.

Example 3

The procedure of Example 1 was repeated, except that the second drying step using reduced pressure was omitted. The foam obtained was a mixture of open-cell and closed-cell foams as a result of the excess solvent present in the powder.

Example 4

The procedure of Example 1 was repeated, except that the second drying step using reduced pressure was carried out after the final particle size reduction, instead of before as in Example 1. The foam obtained was substantially identical to that produced in Example 1, indicating that the second drying step may take place before or after grinding.

Example 5

The procedure of Example 1 was repeated, except that instead of isopropanol, the following solvents were used: (a) ethanol (b.p. 78.5°C), (b) 2-aminoethanol, (b.p. 172.2°C), (c) 2-fluoroethanol (b.p. 103.35°C), (d) methanol (b.p. 42°C), (e) benzene (b.p. 80°C), and (f) acetone (b.p. 56.5°C). Excellent foams were obtained with alcohols (a) and (c) having boiling points in the range 75° to 110°C. The higher boiling alcohol (b) gave poor results due to the difficulty in adequately drying the powder. The lower boiling alcohol (d) was too reactive and produced a poor foam. The inert solvents (e) and (f) were included for comparative purposes only and failed to produce foams.

Example 6

Five samples were prepared according to the procedure described in Example 1 up to the foaming step. The five powder samples were placed in separate preheated circulating air ovens at the following temperatures for the periods indicated: (a) about 125°C for about 40 minutes (b) about 210°C for about 30 minutes (c) about 250°C for about 50 minutes, (d) about 280°C for about 20 minutes, and (e) about 380°C for about 20 minutes. Samples (b), (c), and (d) all produced foams having excellent physical properties. The foam obtained from sample (a) was not fully expanded and cured and that obtained from sample (e) was a mixture of open-cell and closed-cell foams as a result of the high foaming temperature used.

Example 7

The procedure of Example 1 was repeated four times, using various quantities of caprolactam. Whereas Example 1 used 45.2 g (0.4 moles) of caprolactam to give a molar ratio of BTDA to caprolactam of 1:0.25, these experiments used caprolactam quantities of (a) 180.8 g (1.6 moles, 1:1 ratio), (b) 220.8 g (2.0 moles, 1:1.25 ratio), (c) 271 g (2.4 moles, 1:1.5 ratio), and (d) 361.6 g (3.2 moles, 1:2 ratio). The foams produced in (a) and (b) had excellent foam rise characteristics, that produced in (c) had low foam rise, and the sample obtained from (d) failed to foam. Thus ratios of dianhydride to lactam in the range 1:0.05 to 1:1.5 are necessary for the preparation of good quality foams.

Example 8

The procedure of Example 1 was repeated, except that the following diamines were used instead of the 4,4'-diaminodiphenylmethane used in Example 1: (a) *m*-phenylenediamine (0.375 moles), (b) 4,4'-diaminodiphenyl sulphone (0.375 moles), and (c) 4,4'-diaminodiphenyl ether (0.1875 moles) and 4,4'-diaminodiphenyl sulphide (0.1875 moles). In all cases, the resulting foam had a uniform cellular structure and excellent heat and flame resistance. The flexibilities and resiliencies of the foams varied slightly amongst the four products.

Example 9

The procedure of Example 1 was repeated, except that the following lactams and quantities were used instead of the 0.4 moles of caprolactam used in Example 1: (a) 2-pyrrolidone (0.4 moles), (b) 2-piperidone (0.4 moles), and (c) caprolactam (0.2 moles) and 2-piperidone (0.2 moles). In all cases, the resulting foam had excellent flame resistance; slight differences were observed in the physical properties of the foams obtained from the different lactams.

Example 10

The procedure of Example 1 was repeated, except that the following additives were added to the mixture just before the first drying step: (a) about 0.5% by weight (based on solids) of Zonyl FSB (available from E.I. duPont de Nemours), (b) about 1.0% by weight of Corning 190 (available from Dow Corning Corp.), (c) about 43 g of very finely divided aluminium hydroxide, and (d) about 60 g of about 0.25 inch (6.4 mm) graphite fibres. Processing was continued as described in Example 1. The foams produced in (a) and (b) containing the surfactants had improved resiliencies, that produced in (c) containing the filler was somewhat brittle, and that produced in (d) containing the reinforcing fibres had greater strength.

Example 11

The procedure of Example 1 was repeated, but an alternative means of drying was used. Thus the liquid was sprayed into a chamber preheated to a temperature of about 75°C using a high speed atomiser. By carefully adjusting the atomiser, particles having an average diameter in the desired range were obtained: any larger particles were ground to the desired size. Samples of the spray dried powder were foamed by the method described in Example 1, both with and without the second drying step using reduced pressure. Although both samples produced good foams, the additional second drying step produced a foam having slightly better physical properties.

Example 12

Powder samples prepared by the procedures of Example 1 and Example 11 were sprayed into a moving hot air stream maintained at about 300°C. The particles spontaneously expanded to form macroballoons which were carried by the air stream to a collector.

Example 13

The experiments of Example 12 were repeated, except that about 20 g of Zonyl FSB surfactants was added to each mixture before drying. The macroballoons obtained using the surfactant had slightly thicker walls and greater resiliency.

Example 14

Macroballoons produced by the method of Example 13 were mixed with just sufficient of the liquid from Example 1 (before drying) to wet the macroballoons. The wet macroballoons were then packed into a mould preheated to a temperature of about 260°C. After about 30 minutes at this temperature a consolidated article was removed from the mould. The macroballoons were solidly bonded together by the cured resin. The liquid appeared to have polymerised without significant additional foaming.

Example 15

Macroballoons produced by the methods of Example 13 were placed in a mould, which was slightly overfilled. The mould was closed and a pressure of about 0.5 to 1.0 psig (3.3 to 6.6 kPa) was applied to the macroballoons. The mould was maintained at a temperature of about 370°C for a period of about 15 minutes. A consolidated closed cell structure resulting from the macroballoons adhering well to one another was removed from the mould.

Example 16

The procedure of Example 1 was repeated, except that the following additives were added to the mixture just before the initial drying step: (a) about 5% by weight (based on solids) of aluminium trihydrate, (b) about 30% by weight (based on solids) of aluminium trihydrate, (c) about 10% by weight of antimony trioxide, and (d) about 15% by weight of Firebake ZB. Processing was continued as described in Example 1. Samples of each of the resulting foams plus a sample of foam produced by the procedure of Example 1 were exposed to a direct flame. The samples of Example 16 incorporating a fire retardant were found to produce less smoke, have slower flame spread, and to have a greater resistance to burnthrough than the sample of Example 1.

Example 17

Samples of foamable powder were prepared by the procedure of Example 1. Mould set-ups were prepared consisting of two sheets of material (as specified below) temporarily adhered to rigid backing, which were arranged to face one another at a distance of about 0.25 inch (6.4 mm) with the foamable powder uniformly spread over one sheet; the powder occupied about 5% of the volume between the spaced sheets. Experiment (a) used two sheets of aluminium foil, (b) used two sheets of cured polycarbonate resin, and (c) used one sheet of phenolic resin and one sheet of aluminium foil. In each case, the sheets and powder were heated at a temperature of about 120°C for a period of about 40 minutes, then cooled to room temperature, and removed from the rigid backing. In all cases, well-bonded composite sandwiches of foam between the outer sheets were obtained. Experiment (a) was repeated with the sheets being pressed together immediately after foaming to a thickness of about 0.18 inch (4.6 mm) at a temperature of about 175°C; a higher density composite sandwich was obtained.

Example 18

Three aluminium honeycomb structures, each having a thickness of about 0.5 inches (12.7 mm), overall dimensions of about 12 inches by 12 inches (30.5 cm by 30.5 cm), and honeycomb hexagon diameters of about 0.25 inch (6.4 mm) were obtained. One honeycomb structure (a) was partially filled (about 5% by volume) with a foamable powder prepared by the procedure described in Example 1; two other honeycomb structures were entirely filled with (b) macroballoons prepared by the method described in Example 12 and (c) a mixture of macroballoons and resin as described in Example 14. In each case, the honeycomb structure was held between two rigid mould surfaces and heated at a temperature of about 250°C for a period of about 30 minutes. In all cases, strong structures with foam and/or macroballoons bonded to the aluminium honeycomb were obtained. Sample (c) showed the strongest bonding to the honeycomb.

## Claims

1. A method of making a high temperature and flame resistant closed cell polyimide/polyimide-amide foam, which comprises

(a) reacting at least one aromatic tetracarboxylic acid dianhydride (component A) with at least one lactam (component B) in a mole ratio of A:B of from 1:0.05 to 1:1.5 to form an N-substituted imide,

(b) reacting the product of step (a) with an alcohol to form an esterified N-substituted imide,

(c) mixing at least one diamine (component C) with the product of step (b),

(d) drying the resulting liquid mixture,

(e) pulverising the dried material to give particles having an average diameter of from 0.5 to 10 mm, and

(f) polymerising the resulting particles at a temperature of from 90° to 150°C to give a closed cell foam.

2. A method according to claim 1, in which component A is pyromellitic dianhydride and/or 3,3'4,4'-benzophenone tetracarboxylic acid dianhydride.

3. A method according to claim 1 or 2, in which component B is a lactam of the formula

$$H_2C - (CH_2)_x - NHC = O$$

where x is an integer of from 2 to 4.

4. A method according to any of claims 1 to 3, in which the alcohol contains up to seven carbon atoms, has optional halogen and/or amino substituents, and has a boiling point of from 75° to 100°.

5. A method according to any of claims 1 to 4, in which component C is 4,4'-diaminodiphenylmethane, *m*-phenylenediamine, *p*-phenylenediamine, 4,4'-diaminodiphenyl ether, 4,4'-diaminodiphenyl sulphone, 3,3'-diaminodiphenyl sulphone, 4,4'-diaminodiphenyl sulphide, 3,3'-diaminodiphenylmethane, or a mixture of two or more thereof.

6. A method according to claim 5, in which component C further comprises up to 30 mole % of 1,3-diaminopropane, 1,4-diaminobutane, 1,6-diaminohexane, 1,8-diaminooctane, 1,12-diaminododecane, or a mixture of two or more thereof.

7. A method according to any of claims 1 to 6, in which steps (d) and (e) are replaced by a single step in which the mixture obtained in step (c) is spray dried to form particles having the required average diameter.

8. A method according to any of claims 1 to 7, in which polymerisation step (f) is carried out by feeding the particles into a moving hot air stream in order to form discrete macroballoons.

**Patentansprüche**

1. Verfahren zur Herstellung eines hochtemperatur- und flammenbeständigen, geschlossenzelligen Polyimid-Polyimidamidschaums, umfassend das

(a) Umsetzen mindestens eines aromatischen Tetracarbonsäuredianhydrids (Komponente A) mit mindestens einem Lactam (Komponente B) in einem Molverhältnis von A:B von 1:0,05 bis 1:1,5 um ein N-substituiertes Imid zu bilden,

(b) Umsetzen des Produkts aus Stufe (a) mit einem Alkohol, um ein verestertes, N-substituiertes Imid zu bilden,

(c) Vermischen mindestens eines Diamins (Komponente C) mit dem Produkt aus Stufe (b),

(d) Trocknen der resultierenden, flüssigen Mischung,

(e) Pulverisieren des getrockneten Materials, um Teilchen mit einem mittleren Durchmesser von 0,5 bis 10 mm zu erhalten und

(f) Polymerisieren der resultierenden Teilchen bei einer Temperatur von 90 bis 150°C, um einen geschlossenzelligen Schaum zu erhalten.

2. Verfahren nach Anspruch 1, wobei die Komponente (A) Pyromellitsäuredianhybrid und/oder 3,3',4,4'-Benzophenontetracarbonsäuredianhydrid ist.

3. Verfahren nach Anspruch 1 oder 2, wobei die Komponente (B) ein Lactam der Formel

$$H_2C - (CH_2)_x - NHC = O$$

ist, worin x eine ganze Zahl von 2 bis 4 darstellt.

4. Verfahren nach einem der Ansprüche 1 bis 3, wobei der Alkohol bis zu 7 Kohlenstoffatome enthält, wahlweise Halogen- und/oder Aminosubstituenten besitzt und einen Siedepunkt von 75 bis 100°C aufweist.

5. Verfahren nach einem der Ansprüche 1 bis 4, wobei die Komponente C 4,4'-Diaminodiphenylmethan, m-Phenylendiamin, p-Phenylendiamin, 4,4'-Diaminodiphenylether, 4,4'-Diaminodiphenylsulphon, 3,3'-Diaminodiphenylsulphon, 4,4'-Diaminodiphenylsulphid, 3,3'-Diaminodiphenylmethan oder eine Mischung aus zwei oder mehreren hiervon ist.

6. Verfahren nach Anspruch 5, wobei die Komponente C weiterhin bis zu 30 Mol-%, 1,3-Diaminopropan, 1,4-Diaminobutan, 1,6-Diaminohexan, 1,8-Diaminooctan, 1,12-Diaminododecan oder eine Mischung aus zwei oder mehreren hiervon umfaßt.

7. Verfahren nach einem der Ansprüche 1 bis 6, wobei die Stufen (d) und (e) durch eine einzige Stufe ersetzt werden, bei der die in Stufe (c) erhaltene Mischung sprühgetrocknet wird, um Teilchen zu bilden, die den erforderlichen durchschnittlichen Durchmesser aufweisen.

8. Verfahren nach einem der Ansprüche 1 bis 7, wobei die Polymerisationsstufe (f) durch Einspeisen der Teilchen in einen sich bewegenden Heißluftstrom durchgeführt wird, um diskrete Makroballons zu bilden.

**Revendications**

1. Procédé de fabrication d'une mousse de polyimide/polyimide-amide à cellules formées, résistante à température élevée et à la flamme, qui comprend

(a) la réaction d'au moins un dianhydride d'acide tétracarboxylique aromatique (composant A) avec au moins un lactame (composant B) dans un rapport molaire A/B de 1:0,05 à 1:1,5 pour former un imide N-substitué,

(b) la réaction du produit de l'étape (a) avec un alcool pour former un imide N-substitué estérifié,

(c) le mélange d'au moins une diamine (composant C) avec le produit de l'étape (b),

(d) le séchage du mélange liquide résultant,

(e) la pulvérisation du produit séché pour donner des particules ayant un diamètre moyen de 0,5 à 10 mm, et

(f) la polymèrisation des particules résultantes à une température de 90 à 150°C pour donner une mousse à cellules fermées.

2. Procédé selon la revendication 1, dans lequel le composant A est le dianhydride pyromellitique et/ou le dianhydride d'acide 3,3',4,4'-benzophénone tétracarboxylique.

3. Procédé selon la revendication 1 ou 2, dans lequel le composant B est un lactame de formule

$$H_2\overline{C-(CH_2)_x-NHC}=O$$

où x est un entier de 2 à 4.

4. Procédé selon l'une quelconque des revendications 1 à 3, dans lequel l'alcool contient justqu'à 7 atomes de carbone, renferme des substituants halogènes et/ou amino facultatifs et possède un point d'ébullition de 75 à 100°C.

5. Procédé selon l'une quelconque des revendications 1 à 4, dans lequel le composant C est le 4,4'-diaminodiphénylméthane, la m-phénylènediamine, la p-phénylènediamine, l'éther 4,4'-diaminodiphénylique, la 4,4'-diaminodiphénylsulfone, la 3,3'-diaminodiphénylsulfone, le sulfure de 4,4'-diaminodiphényle, le 3,3'-diaminodiphénylméthane, ou un mélange de deux ou plusieurs d'entre eux.

6. Procédé selon la revendication 5, dans lequel le composant C comprend en outre jusqu'à 30 moles % de 1,3-diaminopropane, de 1,4-diaminobutane, de 1,6-diaminohexane, de 1,8-diaminooctane, de 1,12-diaminododécane ou d'un mélange de deux ou plusieurs d'entre eux.

7. Procédé selon l'une quelconque des revendications 1 à 6, dans lequel les étapes (d) et (e) sont remplacées par une seule étape dans laquelle le mélange obtenu dans l'étape (c) est séché par pulvérisation pour former des particules ayant le diamétre moyen requis.

8. Procédé selon l'une quelconque des revendications 1 à 7, dans lequel l'étape de polymérisation (f) est mise en oeuvre par alimentation des particules dans un courant d'air chaud en mouvement en vue de former des perles discrètes.